# EUROPEAN PATENT APPLICATION

(11) **EP 4 610 800 A1**
(43) Date of publication of application: **03.09.2025**
(21) Application number: 23884511.9
(22) Date of filing: 26.09.2023
(51) Int. Cl.: G06F 3/0488

(54) **DISPLAY DEVICE AND HANDWRITING DISPLAY METHOD**

(30) Priority: 31.10.2022 WO PCT/CN2022/128710; 31.05.2023 CN 202310637028
(71) Applicant: Boe Technology Group Co., Ltd., Beijing 100015 (CN); Beijing BOE Technology Development Co., Ltd., Beijing 100176 (CN)
(72) Inventor: WANG, Jingru, Beijing 100176 (CN)
(74) Representative: Cohausz & Florack
(86) International application number: PCT/CN2023/121435
(87) International publication number: WO 2024/093579

(57) **Abstract**

A display device and a handwriting display method, which are used for realizing a plurality of texture writing effects having natural changes, thus better meeting handwriting simulation requirements. The display device comprises a display screen (100), a controller (101) and an input assembly, wherein the display screen (100) is configured to display content, and the controller (101) is configured to execute the following steps: acquiring, by means of the input assembly, trajectory point information of a trajectory point that is included in a writing trajectory of a user; determining, according to the trajectory point information of the trajectory point, a stroke corresponding to the trajectory point, wherein the stroke comprises a stroke contour, the stroke contour comprising K sub-contours, the extension directions of the stroke contour and the sub-contour being the same, and K being an integer greater than 1; performing pixel filling on some sub-contours of the K sub-contours; and controlling the display screen (100) to display the stroke.

## Description

### Cross-Reference to Related Applications

The present application claims the priority of the Chinese patent application filed with the China National Intellectual Property Administration on October 31, 2022, with application number PCT/CN2022/128710 and application name "Display device, handwriting display and method for determining handwriting contour", the entire contents of which are incorporated by reference in this application. This application claims the priority of the Chinese patent application filed with the China National Intellectual Property Administration on May 31, 2023, with application number 202310637028.5 and application name "A display device and handwriting display method", the entire contents of which are incorporated by reference in this application.

### Technical Field

The present disclosure relates to the field of data display technology, and in particular to a display device and a handwriting display method.

### Background

The electronic ink screen, also known as electronic paper display technology, includes two substrates coated with an electronic ink composed of countless tiny transparent particles. The particles are formed by many black and white particles with positive and negative charges. Charged particles of different colors move in different directions due to the different applied electric fields, presenting a black or white effect on the surface of the display screen.

In order to meet the writing needs of users, the electronic ink screen is also equipped with a handwriting function. With the popularization of smart meetings, large-size smart display devices are also equipped with a handwriting function. The handwriting trajectory can be displayed through the handwriting function in the electronic ink screen or smart display device. With the expansion of the ink screen reading book market and the various usage needs of large-size smart display devices, the demand for high-simulation handwriting functions is also increasing.

### Summary

The present invention provides a display device and a handwriting display method, which are used to achieve multiple and naturally changing texture writing effects and better meet the handwriting simulation requirements.

The first aspect of the present disclosure provides a display device, including a display screen, a controller and an input component,:
the display screen is configured to display contents;
the controller is configured to perform:
   obtaining a trajectory point information of trajectory points comprised in a user's writing trajectory through the input component;
   determining a stroke corresponding to the trajectory points based on the trajectory point information of the trajectory points, wherein the stroke comprises a stroke contour, the stroke contour comprises K sub-contours, the stroke contour and the sub-contours extend in a same direction, and K is an integer greater than 1;
   filling some sub-contours of the K sub-contours with pixels;
   controlling the display screen to display the stroke:
      The second aspect of the present disclosure provides a handwriting display method, including:
      obtaining a trajectory point information of trajectory points comprised in a user's writing trajectory an the input component;
      determining a stroke corresponding to the trajectory points based on the trajectory point information of the trajectory points, wherein the stroke comprises a stroke contour, the stroke contour comprises K sub-contours, the stroke contour and the sub-contours extend in the same direction, and K is an integer greater than 1;
      filling on some sub-contours of the K sub-contours with pixels;
      controlling a display screen to display the stroke.

The third aspect of the present disclosure provides a handwriting display device, including:
an information acquisition unit configured to obtain the trajectory point information of the trajectory points included in the user's writing trajectory through the input component;
a stroke contour determining unit configured to determine the stroke corresponding to the trajectory point according to the trajectory point information of the trajectory point, the stroke includes a stroke contour, the stroke contour includes K sub-contours, the stroke contour and the sub-contours have the same extension direction, and K is an integer greater than 1;
a pixel filling unit configured to perform pixel filling on a part of the K sub-contours; and
a stroke display unit configured to control the display screen to display the stroke.

The fourth aspect of the present disclosure provides a computer storage medium for storing a computer program, the program, when executed by a processor, implements steps of the handwriting display method of the second aspect.

These or other aspects of the present disclosure will be more concise and understandable in the following embodiments.

### Brief Description of Figures

In order to more clearly illustrate the technical solutions in the embodiments of the present disclosure, the drawings required for use in the description of the embodiments will be briefly introduced below. Obviously, the drawings described below are only some embodiments of the present disclosure. For a person skilled in the art, other drawings can be obtained based on these drawings without paying creative labor.
FIG. 1 is a schematic diagram of a display device provided by an embodiment of the present disclosure;
FIG. 2 is a schematic diagram of a filling comparison of a texture pattern provided by an embodiment of the present invention;
FIG. 3 is a schematic diagram of a filling comparison of a texture pattern provided by an embodiment of the present invention;
FIG. 4 is a schematic diagram of a filling comparison of a texture pattern provided by an embodiment of the present invention;
FIG. 5 is a schematic diagram of a filling comparison of a texture pattern provided by an embodiment of the present invention;
FIG. 6 is a schematic diagram of a filling comparison of a texture pattern provided by an embodiment of the present invention;
FIG. 7 is a schematic diagram of a filling comparison of a texture pattern provided by an embodiment of the present invention;
FIG. 8 is a schematic diagram of a filling comparison of a texture pattern provided by an embodiment of the present invention;
FIG. 9 is a schematic diagram of a method for drawing a sub-contour provided by an embodiment of the present invention;
FIG. 10 is a schematic diagram of a pencil-shaped simulation effect provided by an embodiment of the present invention;
FIG. 11 is a flowchart of an implementation method of a handwriting display method with a brush simulation effect provided by an embodiment of the present invention;
FIG. 12 is a flow chart of a handwriting display method according to an embodiment of the present invention;
FIG. 13 is a schematic diagram of a handwriting display device provided by an embodiment of the present invention.

### Detailed Description

In order to make the purpose, technical solution and advantages of the present disclosure clearer, the present disclosure will be further described in detail below with reference to the accompanying drawings. Obviously, the described embodiments are only part of the embodiments of the present disclosure, rather than all the embodiments. Based on the embodiments of the present disclosure, all other embodiments obtained by a person skilled in the art without creative work are within the scope of protection of the present disclosure.

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The application scenarios described in the embodiments of the present disclosure are intended to more clearly illustrate the technical solutions of the embodiments of the present disclosure, and do not constitute a limitation on the technical solutions provided by the embodiments of the present disclosure. It is known to those skilled in the art that with the emergence of new application scenarios, the technical solutions provided by the embodiments of the present disclosure are also applicable to similar technical problems. In the description of the present disclosure, unless otherwise specified, "multiple" means two or more.

Electronic ink screens, also known as electronic paper display technology, include two substrates coated with an electronic ink composed of countless tiny transparent particles. The particles are formed by many black and white particles with positive and negative charges. Charged particles of different colors moves in different directions due to different applied electric fields, presenting a black or white effect on the display surface. In order to meet the writing needs of users, electronic ink screens are also equipped with handwriting functions. With the popularization of smart conferences, large-size smart display devices are also equipped with handwriting functions. The handwriting trajectory can be displayed through the handwriting function in the electronic ink screen or smart display device. With the expansion of the ink screen reading book market and the various usage requirements of large-size smart display devices, the demand for high-simulation handwriting functions is also increasing.

It should be noted that the display device in this embodiment includes an intelligent interactive display device with touch and handwriting functions. Writing programs such as an electronic whiteboard are installed on the intelligent display device. Users can use fingers, active pens or passive pens to write on the display device. The intelligent display device can include display modules such as liquid crystal display (LCD), organic electroluminescence display (OLED), and electronic ink, and can be an ink screen that can display writing handwriting in real time.

This embodiment simulates the writing trajectories of different simulated pen types to achieve a variety of naturally changing texture writing effects. It can be applied to various writing scenarios such as handwriting books and display devices, provide a variety of highly simulated handwriting functions and improve the user's writing experience.

It should be noted that, in this embodiment, the writing effect of Feibai is achieved by splitting the stroke contour formed by the writing trajectory, filling some of the split sub-contours, and not filling other sub-contours. Feibai is a special brushwork in calligraphy, and some parts of the strokes are parallel to dry silk. The dry brushstrokes of calligraphy and painting are also generally called Feibai, and the strokes are slightly white, like written with a dry brush. In this embodiment, the method of filling some sub-contours of the stroke contour is named Feibai filling, and the method of filling all the sub-contours of the stroke contour is named full filling.

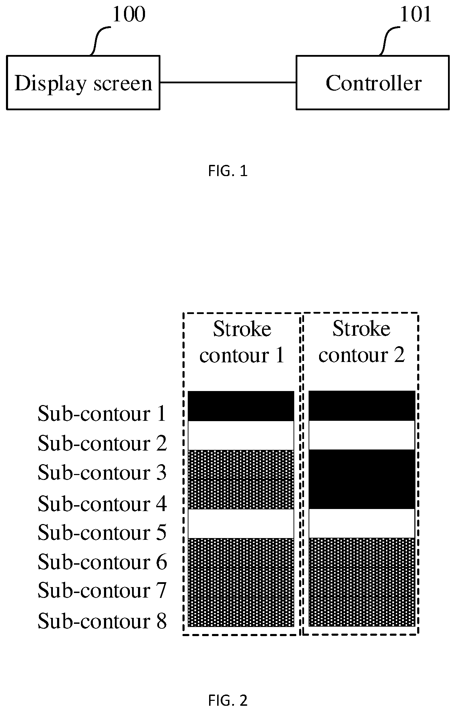

As shown in FIG. 1, a display device provided in this embodiment includes a display screen 100 and a controller 101.

The display screen 100 is configured to display contents.

The controller 101 is configured to perform the following steps.

Step 1: obtaining trajectory point information of trajectory points included in the user's writing trajectory.

Optionally, the simulated pen type corresponding to the user's writing trajectory may be obtained, and texture filling with different effects may be performed according to the simulated pen type. The simulated pen type in this embodiment is determined according to the simulated pen type selected by the user, and the simulated pen type in this embodiment includes but is not limited to pencils, pens, brushes, etc. This embodiment achieves a variety of texture filling effects by performing texture filling on different simulated pen types.

During implementation, a writing trajectory written by a user is received, and sampling processing is performed on the received writing trajectory to obtain trajectory point information of the sampling trajectory point at time t.

Optionally, the trajectory point information includes but is not limited to trajectory point coordinates, sampling time, writing pressure, writing speed, etc. This embodiment determines each stroke written by the user according to the user's pen-down-writing-lifting operation mode, and for each stroke written by the user, uses the handwriting display method disclosed in the present disclosure to fill and display each stroke with different texture effects.

It should be noted that, in this embodiment, the methods for obtaining the trajectory point information of the trajectory points included in the user's writing trajectory include but are not limited to any one or more of the following.

Method 1: obtaining the trajectory point information of the trajectory points included in the writing trajectory of the user through the display screen 100.

In implementation, the trajectory point information may be obtained through a touch component configured on the display screen 100. Optionally, the trajectory point information may be obtained through capacitive touch, infrared touch, electromagnetic touch, or the like.

Method 2: obtaining trajectory point information of trajectory points included in the user's writing trajectory through a handwriting board.

During implementation, a connection is established between the handwriting board and the display device. When a user writes on the handwriting board, the writing can be displayed on the display screen 100 simultaneously. The user can use an electromagnetic pen, a touch pen or other stylus to write on the handwriting board. The handwriting board receives the electromagnetic signal or touch signal of the stylus, determines the trajectory point information, and sends the trajectory point information to the display device to display the writing trajectory.

Method 3: obtaining the trajectory point information of the trajectory points included in the user's writing trajectory through fingertip recognition.

In implementation, the user's writing gesture is collected through a camera on the display device, and the gesture is recognized to obtain the trajectory point information of the corresponding trajectory point.

Optionally, the writing pressure in this embodiment can be obtained by acquiring the writing pressure value of each trajectory point collected by the electromagnetic pen, or can be obtained by collecting through a pressure sensor of a display device, and this embodiment does not impose too many restrictions on this.

Optionally, the writing speed in this embodiment can be obtained by collecting the instantaneous speed of the trajectory point, or can be calculated based on the distance between two adjacent trajectory points and the sampling time, and this embodiment does not impose too many restrictions on this. In implementation, the controller is specifically configured to determine the writing speed of the trajectory point in the following manner:
determining the first midpoint of the trajectory point corresponding to the sampling time t-1 and the trajectory point of the sampling time t; determining the writing speed of the t-th trajectory point according to the Euclidean distance and time difference between the first midpoint and the trajectory point corresponding to the sampling time t.

Step 2: determining the stroke corresponding to the trajectory point according to the trajectory point information of the trajectory point; the stroke includes a stroke contour, the stroke contour includes K sub-contours, the stroke contour and the sub-contours have the same extension direction, and K is an integer greater than 1.

During implementation, the writing trajectory of each stroke written by the user is received, the trajectory point information of each trajectory point included in the writing trajectory of each stroke is obtained, the writing trajectory of each stroke is split to obtain the writing trajectory of each stroke after splitting, and part or all of the sub-contours are selected from the K sub-contours after splitting for filling.

The writing trajectory in this embodiment refers to the touch point information (i.e., trajectory point information) generated by the user using a finger or a writing pen to directly write on a display screen equipped with a touch function. After the hardware layer obtains the writing trajectory, it passes the writing trajectory to the simulation algorithm for processing, and the strokes are determined according to the writing trajectory, so as to display the strokes. Optionally, the trajectory point information is not limited to the trajectory point coordinates, sampling time, writing pressure, writing speed, etc. This embodiment can determine each stroke written by the user according to the user's pen-writing-lifting operation mode, and for each stroke written by the user, the handwriting display method disclosed in this invention is used for displaying each stroke with a Feibai effect. It should be noted that the strokes in this embodiment are displayed after being filled or rendered, and the user can choose the color used for filling or rendering. When the stroke contour is filled with pixels, the pixel filling can be based on the color selected by the user.

In implementation, the stroke contour can be determined directly using the trajectory points or the trajectory points after sparse sampling. The position of the stroke contour can be determined according to the coordinate information of the trajectory points. The width of the stroke contour can be determined according to the writing speed and writing pressure of the trajectory points, thereby determining the stroke contour of the stroke of the trajectory points. The width of the stroke contour can be determined based on different handwriting parameters. The handwriting parameters can be extracted from the trajectory point information. Optionally, the handwriting parameters include but are not limited to writing speed, writing pressure, writing inclination, pen angle, pen turning angle and other parameters. The writing inclination angle represents the maximum value of the absolute value of the inclination angle of the projection of the writing pen on the writing plane relative to the X-axis direction and the Y-axis direction of the writing plane. The pen angle represents the angle between the trajectory vector determined by adjacent trajectory points and the preset horizontal vector. The pen turning angle represents the angle between two consecutive trajectory vectors, and each trajectory vector is determined according to adjacent trajectory points. In implementation, the width of the stroke contour can be calculated based on the handwriting parameters.

It should be noted that the writing plane in this embodiment includes but is not limited to a standard plane or a slightly curved surface (such as the writing plane of a curved screen), that is, the writing plane in this embodiment is allowed to have a certain degree of curvature. In actual calculations, the coordinates of the writing plane are designed according to the actual screen coordinates.

Optionally, the trajectory points in this embodiment also include interpolation points. The interpolation points are determined based on the sampling trajectory points actually obtained by the touch component. For example, each trajectory point is fitted using a Bezier curve to obtain a fitting curve, and the width of the stroke contour of the trajectory points on the fitting curve is calculated. Then, an interpolation operation is performed on the fitting curve to obtain the interpolation point, and the width of the stroke contour of the interpolation point is calculated.

Step 3: performing pixel filling on some of the K sub-contours.

Optionally, according to the simulated pen type, at least part of the K sub-contours are pixel-filled. In implementation, this embodiment can determine whether to perform pixel filling on all sub-contours according to the simulated pen type, and the specific implementation method is as follows.

Method 1: when the simulated pen type is a writing brush, and the writing speed or the writing pressure of the trajectory point meets the preset requirements, performing the pixel filling on part of the K sub-contours.

Optionally, the writing speed of the trajectory point is determined in the following manner: determining the first midpoint of the trajectory point corresponding to the sampling time t-1 and the trajectory point corresponding to the sampling time t respectively; determining the writing speed of the t-th trajectory point based on the Euclidean distance and time difference between the first midpoint and the trajectory point corresponding to the sampling time t.

Optionally, the writing pressure may be obtained by acquiring the writing pressure value of each trajectory point collected by the electromagnetic pen.

In implementation, when the simulated pen type is a writing brush, and the writing speed of the trajectory point is greater than the speed threshold, or the writing pressure is less than the pressure threshold, the pixel filling are performed on some of the K sub-contours to generate a texture with a Feibai effect.

Mode 2: when the simulation pen type is a writing brush and the writing speed or writing pressure of the trajectory point does not meet the preset requirements, performing the pixel filling on all the sub-contours of the K sub-contours.

In some embodiments, when the simulated pen type is not a brush or the writing speed or writing pressure of the trajectory point meets preset requirements, the stroke contour is not split, that is, the entire stroke contour is directly filled with pixels or not filled.

Method 3: when the simulated pen type is not a writing brush, performing the pixel filling on all the K sub-contours.

During implementation, when the simulated pen type is a writing brush, in order to improve the writing simulation effect of the writing brush, when the writing speed or the writing pressure of the trajectory point meets the preset requirements, pixels are filled on part of the sub-contour to produce a Feibai effect.

When the simulated pen type is a hard pen type such as a pencil or a fountain pen, there is no need to produce a Feibai effect, and all sub-contours can be filled with pixels.

Step 4: controlling the display screen to display the strokes.

It should be noted that the strokes in this embodiment are displayed after being filled. The writing trajectory in this embodiment refers to the touch point information (i.e., trajectory point information) generated by the user using his fingers or a writing pen to directly write on a display screen equipped with a touch function. After the hardware layer obtains the writing trajectory, it passes the writing trajectory to the simulation algorithm for processing, and determines the strokes based on the writing trajectory, so as to display the strokes.

In some embodiments, when this embodiment performs the pixel filling on some sub-contours of the K sub-contours, there is a sub-contour that is not pixel filled between at least two sub-contours that are pixel filled. A Feibai effect can be formed by the filled and unfilled sub-contours.

In some embodiments, some sub-contours are randomly selected from the K sub-contours for pixel filling; or, some sub-contours are selected from the K sub-contours for randomly pixel filling.

In some embodiments, the specific implementation method of this embodiment of performing pixel filling on a part of the K sub-contours is as follows:
performing pixel filling on the stroke contour by using a texture atlas with Feibai features; the texture atlas with Feibai features is used for pixel-filling of a part of the K sub-contours.

In some embodiments, the texture atlas with the Feibai features includes multiple texture patterns, and different texture patterns are used for representing different Feibai features. The controller is specifically configured to execute: performing pixel filling on the stroke contour in sequence according to the multiple texture patterns.

In implementation, the texture pattern is determined based on a texture array, and the texture array is used for determining the filling position and filling method of the sub-contour to be filled. Multiple texture patterns in a texture atlas are used for pixel-filling of the stroke contours corresponding to the current trajectory point and the trajectory points after the current trajectory point. It should be noted that each texture pattern in this embodiment is used for pixel-filling of the stroke contours corresponding to one or more trajectory points. For example, if the texture atlas includes 8 texture patterns, the first texture pattern is used for pixel-filling of the stroke contours corresponding to the 1st to 3rd trajectory points, the second texture pattern is used for pixel-filling of the stroke contours corresponding to the 4th to 6th trajectory points, the third texture pattern is used for pixel-filling of the stroke contours corresponding to the 7th to 9th trajectory points, and so on.

In some embodiments, when the stroke contours are pixel-filled by using different texture patterns, at least one of the number, position or filled texture type of sub-contours in the stroke contours to be pixel-filled is different for the stroke contours to be pixel-filled.

In practice, different texture patterns are designed to achieve different Feibai texture effects. The specific implementation methods are as follows:
Mode 1: when the stroke contours are pixel-filled by using different texture patterns, the number or position of the sub-contours that are not pixel-filled in the stroke contours are different;
Mode 2: when the stroke contours are pixel-filled using different texture patterns, and the number and position of the sub-contours that are not pixel-filled in the stroke contours are the same, the sub-contours that are pixel-filled in the stroke contours are filled with different texture types.

Optionally, the texture types in this embodiment include but are not limited to scattered point filling, solid filling, etc.

In some embodiments, the texture atlas includes a plurality of texture patterns arranged in sequence. The controller is specifically configured to execute: performing the pixel-filling on the stroke portion in sequence according to the arrangement order of the plurality of texture patterns.

In practice, the texture patterns in this embodiment are arranged in sequence, and adjacent texture patterns satisfy certain rules, thereby avoiding the problem of texture breakage and mutation caused by mutation of adjacent texture patterns. The specific rules satisfied are as follows.

The difference of Feibai features between adjacent texture patterns is less than a difference threshold. The difference of Feibai features is used for indicating the difference of Feibai effects between different texture patterns, and the difference is determined by at least one of the number, position or filled texture type of the sub-contours filled with pixels in the stroke contours when the texture pattern is used to fill the stroke contours with pixels.

In some embodiments, adjacent stroke contours filled by texture patterns include at least one group of sub-contours having the same position and different filling modes.

In the adjacent stroke contours filled with texture patterns, the number of the sub-contours being adjacent with each other in the at least one group of sub-contours is less than a difference threshold.

The sub-contours are arranged sequentially in the stroke contour, and the arrangement orders of the sub-contours being adjacent with each other in the stroke contours are continuous.

In the implementation, adjacent texture pattern 1 and texture pattern 2 are taken as examples for specific description. As shown in FIG. 2, this embodiment provides a filling comparison schematic diagram of a texture pattern. The texture pattern 1 performs pixel filling on stroke contour 1 of trajectory point 1, and the texture pattern 2 performs pixel filling on stroke contour 2 of trajectory point 2. The stroke contour 1 includes 8 sub-contours arranged in sequence (sub-contour 1, sub-contour 2, sub-contour 3, sub-contour 4, sub-contour 5, sub-contour 6, sub-contour 7, and sub-contour 8, respectively), and the stroke contour 2 includes 8 sub-contours arranged in sequence.

If the stroke contours filled by the texture pattern 1 and the texture pattern 2 include at least one group of sub-contours with the same position and different filling modes, for example, the texture pattern 1 uses scattered points filling for the sub-contour 3 and the sub-contour 4 in the filled stroke contour 1, and the texture pattern 2 uses solid filling for the sub-contour 3 and the sub-contour 4 in the filled stroke contour 2, then the number of sub-contours being adjacent with each other is 2, that is, the number of sub-contours being adjacent with each other (sub-contour 3 and sub-contour 4) should be less than the difference threshold, for example, the number of sub-contours being adjacent with each other should be less than 3.

In some embodiments, the filling mode includes at least one of texture filling of multiple texture types, and non-filling. The non-filling means no pixel filling. The adjacent texture patterns are specifically any one or more of the following rules.

Rule 1: The adjacent stroke contours filled with texture patterns include at least one group of sub-contours with the same position and different texture types for texture filling. In the adjacent stroke contours filled with texture patterns respectively, the number of sub-contours being adjacent with each other in the at least one group of sub-contours is less than the first difference threshold.

In the implementation, the adjacent texture pattern 1 and texture pattern 2 are taken as examples for specific description. The texture pattern 1 performs pixel filling on the stroke contour 1 of trajectory point 1, and the texture pattern 2 performs pixel filling on the stroke contour 2 of trajectory point 2. The stroke contour 1 includes 8 sub-contours arranged in sequence (sub-contour 1, sub-contour 2, sub-contour 3, sub-contour 4, sub-contour 5, sub-contour 6, sub-contour 7, and sub-contour 8, respectively), and the stroke contour 2 includes 8 sub-contours arranged in sequence.

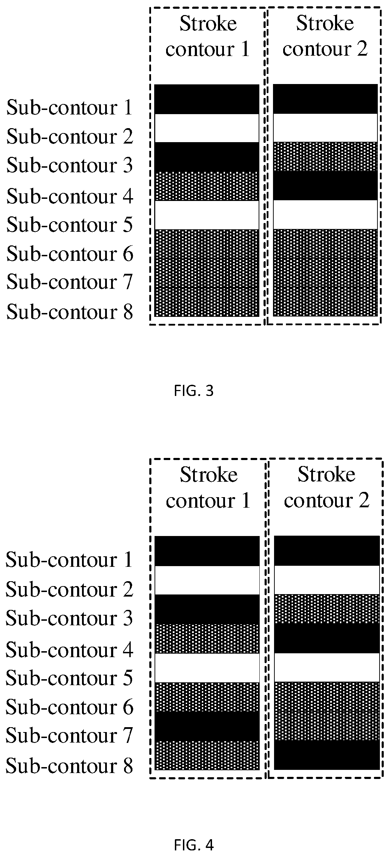

If the stroke contours filled by the texture pattern 1 and the texture pattern 2 include at least one group of sub-contours with the same position and different filling modes, as shown in FIG. 3, this embodiment provides a filling comparison schematic diagram of a texture pattern. For example, the texture pattern 1 uses solid filling for sub-contour 3 in the filled stroke contour 1, and uses scattered points filling for sub-contour 4. The texture pattern 2 uses scattered points filling for sub-contour 3 in the filled stroke contour 2, and uses solid filling for sub-contour 4. At this time, the number of sub-contours being adjacent with each other is 2, that is, the number of sub-contours being adjacent with each other (sub-contours 3 and sub-contours 4) should be less than the first difference threshold, for example, the number of sub-contours being adjacent with each other should be less than 4.

As shown in FIG. 4, this embodiment provides a filling comparison schematic diagram of a texture pattern. When the number of sub-contours being adjacent with each other is set to be less than 3, the texture pattern 1 uses solid for filling sub-contour 3 in the filled stroke contour 1, uses scattered points filling for sub-contour 4, uses solid for filling sub-contour 7, and uses scattered points for filling sub-contour 8. The texture pattern 2 uses scattered points for filling sub-contour 3 in the filled stroke contour 2, uses solid for filling sub-contour 4, uses scattered points for filling sub-contour 7, and uses solid for filling sub-contour 8. At this time, the number of sub-contours being adjacent with each other is 2, the number of sub-contours being adjacent with each other (sub-contour 3 and sub-contour 4) is less than 3, and the number of sub-contours being adjacent with each other (sub-contour 7 and sub-contour 8) is also less than 3, which meets the change requirements of the texture pattern.

Rule 2: the adjacent stroke contours filled with texture patterns include at least one group of sub-contours with the same position and one sub-contour is filled with texture and the other sub-contour is not filled. In the adjacent stroke contours filled with texture patterns, the number of sub-contours being adjacent with each other in the at least one group of sub-contours is less than the second difference threshold.

Optionally, the first difference threshold is greater than the second difference threshold.

In the implementation, the adjacent texture pattern 1 and texture pattern 2 are taken as examples for specific description. The texture pattern 1 performs pixel filling on the stroke contour 1 of trajectory point 1, and the texture pattern 2 performs pixel filling on the stroke contour 2 of trajectory point 2. The stroke contour 1 includes 8 sub-contours arranged in sequence (sub-contour 1, sub-contour 2, sub-contour 3, sub-contour 4, sub-contour 5, sub-contour 6, sub-contour 7, and sub-contour 8, respectively), and the stroke contour 2 includes 8 sub-contours arranged in sequence.

If the stroke contours filled by the texture pattern 1 and the texture pattern 2 include at least one group of sub-contours with the same position and different filling modes, as shown in FIGS, this embodiment provides a filling comparison schematic diagram of a texture pattern, for example, the texture pattern 1 uses solid filling for sub-contour 3 in the filled stroke contour 1, and uses scattered points filling for sub-contour 4. The texture pattern 2 does not fill sub-contour 3 and sub-contour 4 in the filled stroke contour 2. At this time, the number of sub-contours being adjacent with each other is 2, that is, the number of sub-contours being adjacent with each other (sub-contour 3 and sub-contour 4) should be less than the second difference threshold, for example, the number of sub-contours being adjacent with each other should be less than 3. When the second difference threshold is set to 2, the number of sub-contours being adjacent with each other is 1. As a special case, for example, the texture pattern 1 uses solid filling for sub-contour 1 in the filled stroke contour 1, and the texture pattern 2 does not fill sub-contour 1 in the filled stroke contour 2, that is, the number of sub-contours being adjacent with each other (sub-contour 3) is 1.

By setting a difference threshold (the first difference threshold or the second difference threshold), texture breaks or abrupt change in adjacent texture patterns can be avoided, thereby improving the simulation effect.

In some embodiments, in the sub-contours of the stroke contour filled with the texture pattern, the number of combined sub-contours is less than a set value. The combined sub-contours represent sub-contours filled with textures of the same texture type and being adjacent with each other. The sub-contours are arranged sequentially in the stroke contour, and the arrangement order of the sub-contours being adjacent with each other in the stroke contour is continuous.

In implementation, the stroke contour filled with the texture pattern includes 8 sub- contours arranged in sequence (sub-outline 1, sub-outline 2, sub-outline 3, sub-outline 4, sub-outline 5, sub-outline 6, sub-outline 7, and sub-outline 8, respectively). For example, if the sub-contour 2 and the sub-contour 3 are filled with scattered points, the sub-contour 4 and sub-contour 5 are filled with solid, and the sub-contour 7 and the sub-contour 8 are filled with scattered points, then the sub-contour 2 and the sub-contour 3 are combined, the sub-contour 4 and the sub-contour 5 are combined, and the sub-contour 7 and the sub-contour 8 are combined. At this time, the number of combined sub-contours is 3, and 3 should be less than the set value.

In some embodiments, the texture pattern includes a first texture pattern and a second texture pattern. In the sub-contours of the stroke contour filled with the first texture pattern, the number of combined sub-contours is less than the number of combined sub-contours in the sub-contours of the stroke contour filled with the second texture pattern.

In implementation, the number of combined sub-contours in the sub-contours of the stroke contour filled with the first texture pattern should be less than the number of combined sub-contours in the sub-contours of the stroke contour filled with the second texture pattern.

Since the first texture pattern is used for serving as a transition between the full filling and the Feibai filling, in order to achieve a good texture transition between the full filling and the Feibai filling, the number of combined sub-contours in the first texture pattern is set to be less than the number of combined sub-contours in the second texture pattern.

In some embodiments, the texture pattern includes a first texture pattern and a second texture pattern. The degree of Feibai of the first texture pattern is lower than the degree of Feibai of the second texture pattern. The degree of Feibai represents the number of sub-contours that are not pixel-filled in the stroke contour. The controller is specifically configured to execute: performing pixel-filling on the stroke contours in sequence from the first texture pattern to the second texture pattern.

In implementation, pixel filling is performed on the stroke contour of the current trajectory point and the stroke contour of the trajectory point after the current trajectory point in sequence from the first texture pattern to the second texture pattern.

In some embodiments, the texture pattern includes a first texture pattern and a second texture pattern arranged in sequence. The controller is specifically configured to execute:
(1) If the texture atlas is not used to perform pixel filling on the stroke contour corresponding to the previous trajectory point, performing pixel filling on the stroke contour corresponding to the current trajectory point according to the first texture pattern; in implementation, the stroke contours of the current trajectory point and the trajectory points after the current trajectory point can be pixel-filled in sequence according to the arrangement order of the first texture pattern;
(2) If a texture atlas is used to perform pixel filling on the stroke contour corresponding to the previous trajectory point, then performing pixel filling on the stroke contours corresponding to the current trajectory point and the trajectory points after the current trajectory point according to the arrangement order of the texture patterns in the texture atlas.

In some embodiments, when a plurality of texture patterns in the texture atlas are used for pixel filling, the corresponding texture pattern is replaced once every at least one trajectory point.

In some embodiments, when a plurality of texture patterns in the texture atlas are used for pixel filling, the corresponding first texture pattern is replaced every N trajectory points, and/or the corresponding second texture pattern is replaced every M trajectory points.

Optionally, N is less than M.

Optionally, the N is a preset value, or the N is determined by the sampling time of the first trajectory point for pixel filling using the texture array.

Optionally, the M is a preset value, or the M is determined by the sampling time of the first trajectory point for pixel filling using the texture array.

In some embodiments, the texture pattern includes a plurality of second texture patterns, and the controller is specifically configured to execute:
when a plurality of second texture patterns are used for pixel filling, selecting the second texture pattern in the order in which the second texture forward group and the second texture reverse group are alternately arranged in sequence, to perform the pixel filling on the current trajectory point and the trajectory points after the current trajectory point.

The second texture forward group includes a plurality of second texture patterns arranged in sequence, and the second texture reverse group includes a plurality of second texture patterns arranged in reverse sequence.

In this embodiment, the second texture forward group and the second texture reverse group include the same second texture patterns, but the arrangement orders of the second texture patterns are different. The Z-shaped order can achieve a texture gradient effect and avoid texture breaks or abrupt change. Moreover, only a small amount of texture patterns need to be stored to achieve a better texture gradient effect, effectively saving storage space.

In implementation, in the Z-shaped order, taking the case where the texture pattern includes 5 second texture patterns arranged in sequence (texture pattern 1, texture pattern 2, texture pattern 3, texture pattern 4, and texture pattern 5, respectively) as an example, the first texture forward group includes the texture pattern 1, the texture pattern 2, the texture pattern 3, the texture pattern 4, and the texture pattern 5 arranged in sequence, and the second texture forward group includes the texture pattern 5, the texture pattern 4, the texture pattern 3, the texture pattern 2, and the texture pattern 1 arranged in reverse order.

Then the texture patterns can be selected in the order of the texture pattern 1, the texture pattern 2, the texture pattern 3, the texture pattern 4, the texture pattern 5, the texture pattern 5, the texture pattern 4, the texture pattern 3, the texture pattern 2, the texture pattern 1, the texture pattern 1, the texture pattern 2, the texture pattern 3, the texture pattern 4, the texture pattern 5... to perform pixel filling on the stroke contour corresponding to each trajectory point.

The texture patterns in this embodiment are determined based on the texture array.

In some embodiments, there are a plurality of texture atlas, and different texture atlases are used for representing different Feibai features. The controller is specifically configured to execute:
storing the plurality of texture atlases; selecting a texture atlas from the plurality of texture atlases to perform pixel filling on the stroke contour.

Optionally, a texture atlas is arbitrarily selected from the plurality of texture atlases to perform pixel filling on the stroke contour, or a corresponding texture atlas is selected from the plurality of texture atlases according to the sampling time of the trajectory point to perform pixel filling on the stroke contour.

In some embodiments, when the previous trajectory point adopts the full filling mode and the current trajectory point adopts the Feibai filling mode, a texture atlas is selected from the plurality of texture atlases to perform pixel filling on the stroke contour of the current trajectory point. The full filling mode is used for performing pixel filling on the stroke contour of the trajectory point, and the Feibai filling mode is used for perform pixel filling on a part of sub-contours of the stroke contour of the trajectory point.

It should be noted that the texture patterns in this embodiment are determined based on the texture array, and the texture array is used for determining the filling position and filling mode of the sub-contour to be filled.

Optionally, the embodiment performs pixel filling on a part of the sub-contours in the following manner:
selecting a texture array from a pre-stored texture set; the texture set includes a plurality of texture arrays, and the texture arrays are used for determining the filling position and filling mode of the sub-contour to be filled; each texture array is used for performing pixel filling on the stroke contours corresponding to multiple consecutive trajectory points, and performing the pixel filling on a part of the sub-contours according to the selected texture array.

In some embodiments, when the simulation pen type is a writing brush, and the writing speed or writing pressure of the trajectory points meets the preset requirements, the pixel filling is performed on some sub-contours of the K sub-contours, and specifically, the pixel filling is performed on some sub-contours in the following manner:
selecting a texture array from a pre-stored texture set; the texture set includes a plurality of texture arrays, and the texture arrays are used for determining the filling position and filling mode of the sub-contours to be filled; each texture array is used for performing pixel filling on the stroke contours corresponding to multiple consecutive trajectory points, and performing the pixel filling on a part of the sub-contours according to the selected texture array.

Optionally, the filling modes in the embodiment include but are not limited to scattered points filling, solid filling and non-filling.

The texture array in the embodiment is used for determining the texture patterns, and the texture patterns are used for filling the stroke contours. In implementation, if K=20, a texture set containing 8 texture arrays is given as follows. Taking the first texture array as an example, the first two digits in {0,2,1} of the first texture array indicate that the first to third sub-contours (excluding the third sub-contour) need to be filled, and the third digit value of 1 indicates that a solid filling mode is used; the first two digits in {2,3,2} indicate that the third to fourth sub-contours (excluding the fourth sub-contour) need to be filled, and the third digit value of 2 indicates that a random scattered points filling mode is used. Taking the third texture array as an example, the first two digits in {0,2,2} of the third texture array indicate that the first to third sub-contours (excluding the third sub-contour) need to be filled, and the third digit value of 2 indicates that a random scattered points filling mode is used, and the first two digits in {3,9,1} indicate that the 4th to 10th sub-contours (excluding the 10^{th} sub-contours) need to be filled, and the third digit value of 1 indicates that solid filling mode is used; the first two digits in {10,15,1} indicate that the 11th to 16th sub-contours (excluding the 16th sub-contours) need to be filled, and the third digit value of 1 indicates that solid filling mode is used; the first two digits in {15,16,2} indicate that the 16th to 17th sub-contours (excluding the 17th sub-contour) need to be filled, and the third digit value of 2 indicates that a random scattered points filling is used; the first two digits in {16,20,1} indicate that the 17th to 21st sub-contours (excluding the 21st sub-contours) need to be filled, and the third digit value of 1 indicates that solid filling mode is used. Taking the fifth texture array as an example, the first two digits of {3,6,1} of the fifth texture array indicate that the 4th to 7th sub-contours (excluding the 7th sub-contour) need to be filled, and the third digit value of 1 indicates that solid filling mode is used; the first two digits of {6,8,2} indicate that the 7th to 9th sub-contours (excluding the 9th sub-contours) need to be filled, and the third digit value of 2 indicates that a random scattered points filling mode is used; the first two digits of {10,11,1} indicate that the 11th to 12th sub-contours (excluding the 12th sub-contours) need to be filled, and the third digit value of 1 indicates that a solid filling mode is used; the first two digits of {11,13,2} indicate that the sub-contours from the 12th to the 14th (excluding the 14th sub-contours) need to be filled, and the third digit value of 2 indicates that a random scattered points filling mode is used; the first two digits of {13,17,1} indicate that the sub-contours from the 14th to the 18th (excluding the 18th sub-contours) need to be filled, and the third digit value of 1 indicates that a solid filling mode is used; the first two digits of {18,20,1} indicate that the sub-contours from the 19th to the 21st (excluding the 21st sub-contour) need to be filled, and the third digit value of 1 indicates that a solid filling mode is used, and so on.

```
{{{0,2,1},{2,3,2},{3,20,1}},
                {{0,2,1},{3,20,1}},
                {{0,2,2},{3,9,1},{10,15,1},{15,16,2},{16,20,1}},
                {{0,1,2},{3,8,1},{8,9,2},{11,13,2},{13,16,1},{17,20,1}},
                {{3,6,1},{6,8,2},{10,11,1},{11,13,2},{13,17,1},{18,20,1}},
                {{2,6,1},{6,9,2},{10,13,2},{13,16,1},{17,20,1}},
                {{2,6,1},{6,8,2},{8,9,1},{10,12,2},{12,13,1},{14,20,1}},
                {{0,1,2},{2,6,1},{6,9,2},{10,12,2},{12,13,1},{14,20,1}}
                }.
 
```

In some embodiments, the texture set includes a plurality of texture arrays arranged in sequence, and the pixel filling is performed on the stroke contour in sequence according to the order of the plurality of texture arrays.

In implementation, the pixel filling is performed on the stroke contours corresponding to a trajectory point and the trajectory points after the trajectory point in sequence according to the order of the texture arrays.

In the implementation, according to the arrangement order of the texture arrays, the pixel filling is performed on the stroke contour corresponding to each trajectory point in turn. In order to make the texture transition more natural and avoid problems such as texture breakage and abrupt change, the embodiment designs adjacent texture arrays as follows:
the adjacent stroke contours filled by the texture arrays include at least one group of sub-contours having the same position and different filling modes;
in the stroke contours filled by each of the adjacent texture arrays, the number of the sub-contours being adjacent with each other in the at least one group of sub-contours is less than a difference threshold.

The sub-contours are arranged sequentially in the stroke contour, and the arrangement order of the sub-contours being adjacent with each other in the stroke contour is continuous.

In the implementation, the adjacent texture array 1 and texture array 2 are taken as examples for specific description. The texture array 1 fills the stroke contour 1 with pixels, and the texture array 2 fills the stroke contour 2 with pixels. The stroke contour 1 includes 8 sub-contours arranged in sequence (sub-contour 1, sub-contour 2, sub-contour 3, sub-contour 4, sub-contour 5, sub-contour 6, sub-contour 7, and sub-contour 8, respectively), and the stroke contour 2 includes 8 sub-contours arranged in sequence.

If the stroke contours filled by the texture array 1 and the texture array 2 include at least one group of sub-contours with the same position and different filling modes, for example, the texture array 1 uses solid filling for sub-contour 3 in the filled stroke contour 1 and uses scattered points filling for sub-contour 4, and the texture array 2 uses scattered points filling for sub-contour 3 in the filled stroke contour 2 and uses solid filling for sub-contour 4, that is, the number of sub-contours (sub-contour 3 and sub-contour 4) being adjacent with each other should be less than the first difference threshold, for example, the number of sub-contours being adjacent with each other should be less than 4.

For another example, when the number of sub-contours being adjacent with each other is set to be less than 3, the texture array 1 uses solid filling for sub-contour 3 in the filled stroke contour 1, uses scattered points filling for sub-contour 4, uses solid filling for sub-contour 7, and uses scattered points filling for sub-contour 8.

The texture array 2 uses scattered points filling for sub-contour 3 in the filled stroke contour 2, uses solid filling for sub-contour 4, uses scattered points filling for sub-contour 7, and uses solid filling for sub-contour 8.

At this time, the number of adjacent sub-contours (sub-contour 3 and sub-contour 4) is less than 3, and the number of adjacent sub-contours (sub-contour 7 and sub-contour 8) is also less than 3, which meets the change requirements of the texture array.

In some embodiments, the filling mode includes at least one of texture filling of multiple texture types, and non-filling. The non-filling means no pixel filling. It should be noted that the non-filling in this embodiment does not mean that the corresponding display area has no color display. For example, when the display screen is an electronic ink screen, the non-filling display area may have no color display, but when the display screen is an LCD display, non-filling means that pixels are not filled according to the filling color selected by the user, but the corresponding display area that is not filled may also display other background colors. For example, when handwriting software is installed, the background color of the handwriting software may be displayed in the corresponding display area.

The design rules for adjacent texture arrays are as follows.

Rule 1: The stroke contours filled by adjacent texture arrays include at least one group of sub-contours with the same position and different texture types filled by the textures. In the stroke contours filled by adjacent texture arrays, the number of sub-contours being adjacent with each other in the at least one group of sub-contours is less than a first difference threshold.

In the implementation, the adjacent texture array 1 and texture array 2 are taken as examples for specific description. The texture array 1 performs pixel filling on the stroke contour 1 of trajectory point 1, and the texture array 2 performs pixel filling on the stroke contour 2 of trajectory point 2. The stroke contour 1 includes 8 sub-contours arranged in sequence (sub-contour 1, sub-contour 2, sub-contour 3, sub-contour 4, sub-contour 5, sub-contour 6, sub-contour 7, and sub-contour 8, respectively), and the stroke contour 2 includes 8 sub-contours arranged in sequence.

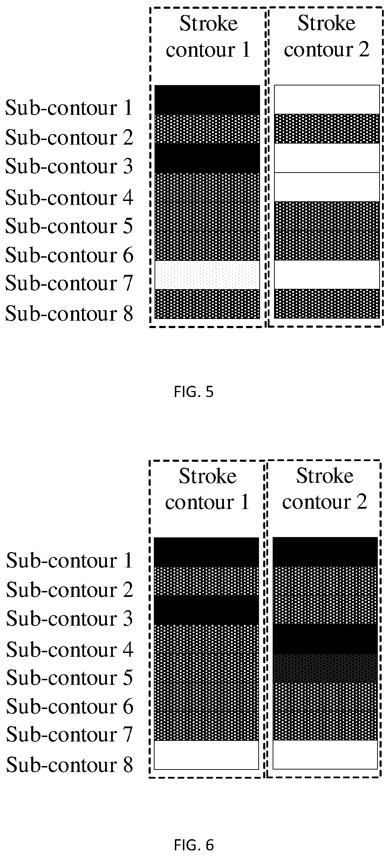

If the stroke contours filled by the texture array 1 and the texture array 2 include at least one group of sub-contours with the same position and different filling modes, as shown in FIG. 6, the embodiment provides a filling comparison schematic diagram of a texture pattern, for example, the texture array 1 uses solid filling for sub-contour 3 in the filled stroke contour 1, and uses scattered points filling for sub-contour 4 and sub-contour 5. The texture array 2 uses scattered points filling for sub-contour 3 in the filled stroke contour 2, and uses solid filling for sub-contour 4 and sub-contour 5. At this time, the number of sub-contours being adjacent with each other is 3, that is, the number of sub-contours being adjacent with each other (sub-contour 3, sub-contour 4 and sub-contour 5) should satisfy the requirement of being less than the first difference threshold, for example, the number of sub-contours being adjacent with each other should be less than 4.

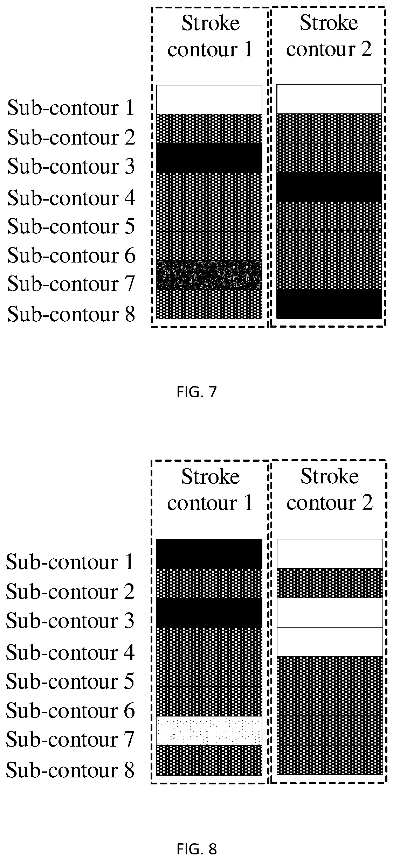

As shown in FIG. 7, the embodiment provides a filling comparison schematic diagram of a texture pattern. For example, when the number of sub-contours being adjacent with each other is set to be less than 3, the texture array 1 uses solid filling for sub-contour 3 in the filled stroke contour 1, uses scattered points filling for sub-contour 4, uses solid filling for sub-contour 7, and uses scattered points filling for sub-contour 8. The texture array 2 uses scattered points filling for sub-contour 3 in the filled stroke contour 2, uses solid filling for sub-contour 4, uses scattered points filling for sub-contour 7, and uses solid filling for sub-contour 8. At this time, the number of sub-contours being adjacent with each other is 2, the number of sub-contours being adjacent with each other (sub-contour 3 and sub-contour 4) is less than 3, and the number of sub-contours being adjacent with each other (sub-contour 7 and sub-contour 8) is also less than 3, which meets the change requirements of the texture array.

For example, when the first difference threshold is 3, there is a filling mode for solid filling at most two sub-contours (full black filling) in the texture array 1, and there is a filling mode for scattered points filling at most two sub-contours in the texture array 2, and the positions of the two sub-contours in the texture array 1 (such as sub-contour 3 and sub-contour 4) are the same as the positions of the two sub-contours in the texture array 2. That is, the filling mode of sub-contours 3 and sub-contours 4 in the texture array 1 is solid filling, and the filling mode of sub-contours 3 and sub-contours 4 in the texture array 2 is scattered points filling.

Rule 2: the stroke contours filled with adjacent texture arrays include at least one group of sub-contours with the same position and one sub-contour is filled with texture and the other sub-contour is not filled. In the stroke contours filled with adjacent texture arrays, the number of sub-contours being adjacent with each other in the at least one group of sub-contours is less than the second difference threshold.

Optionally, the first difference threshold is greater than the second difference threshold.

In the implementation, the adjacent texture array 1 and texture array 2 are taken as examples for specific description. The texture array 1 performs pixel filling on the stroke contour 1 of trajectory point 1, and texture array 2 performs pixel filling on the stroke contour 2 of trajectory point 2. The stroke contour 1 includes 8 sub-contours arranged in sequence (sub-contour 1, sub-contour 2, sub-contour 3, sub-contour 4, sub-contour 5, sub-contour 6, sub-contour 7, and sub-contour 8, respectively), and the stroke contour 2 includes 8 sub-contours arranged in sequence.

If the stroke contours filled by the texture array 1 and the texture array 2 include at least one group of sub-contours with the same position and different filling modes, as shown in FIG. 8, the embodiment provides a filling comparison schematic diagram of a texture pattern. For example, the texture array 1 uses solid filling for the sub-contour 3 in the filled stroke contour 1, and uses scattered points filling for the sub-contour 4, and the texture array 2 does not fill the sub-contour 3 and the sub-contour 4 in the filled stroke contour 2. At this time, the number of sub-contours being adjacent with each other is 2, that is, the number of sub-contours being adjacent with each other (sub-contours 3 and sub-contours 4) should be less than the second difference threshold, for example, the number of sub-contours being adjacent with each other should be less than 3. When the second difference threshold is set to 2, the number of sub-contours being adjacent with each other is 1. As a special case, for example, the texture array 1 uses solid filling for the sub-contour 1 in the filled stroke contour 1, and the texture array 2 does not fill the sub-contour 1 in the filled stroke contour 2, that is, the number of sub-contours being adjacent with each other (sub-contour 3) is 1. The texture array 1 does not fill the sub-contour 7 in the filled stroke contour 1, and the texture array 2 uses scattered points filling for the sub-contour 7 in the filled stroke contour 2, that is, the number of sub-contours being adjacent with each other (sub-contour 7) is 1.

By setting a difference threshold (a first difference threshold or a second difference threshold), the texture breakage or abrupt change in adjacent texture arrays can be avoided, thereby improving simulation effect.

In some embodiments, the texture array includes a first texture array and a second texture array, and the number of sub-contours for pixel filling in the first texture array is higher than the number of sub-contours for pixel filling in the second texture array. The controller is specifically configured to fill the stroke contours with pixels in order from the first texture array to the second texture array.

In some embodiments, in the sub-contours of the stroke contour filled by the texture array, the number of combined sub-contours is less than a set value. The combined sub-contours represent sub-contours filled by the textures of the same texture type and being adjacent with each other. The sub-contours are arranged sequentially in the stroke contour, and the arrangement order of the sub-contours being adjacent with each other in the stroke contour is continuous.

Optionally, the texture array includes a first texture array and a second texture array.

In the sub-contours of the stroke contour filled by the first texture array, the number of combined sub-contours is less than the number of the second texture array.

If there are continuous sub-contours that use the same filling mode in the first texture array, the number of combined sub-contours obtained by combing the continuous sub-contours is less than a set value. The set value can be determined based on the number K of sub-contours obtained by splitting the stroke contour, for example, the set value is K/4.

Optionally, the texture array includes a first texture array arranged in sequence, and a second texture array arranged in sequence, and the second texture array is arranged after the first texture array. The controller is specifically configured to fill the stroke contour with pixels in sequence from the first texture array to the second texture array.

In implementation, after the stroke contours corresponding to the plurality of trajectory points are pixel-filled in sequence according to the order of the first texture array, the stroke contours corresponding to the plurality of trajectory points are pixel-filled in sequence according to the order of the second texture array.

For example, take a texture set containing 8 texture arrays as an example, the texture set includes 3 first texture arrays and 5 second texture arrays, and the texture arrays are arranged in sequence as texture array 1, texture array 2, texture array 3, texture array 4, texture array 5, texture array 6, texture array 7, and texture array 8 in the texture set. The first texture array includes the texture array 1, the texture array 2, and the texture array 3 arranged in sequence. The second texture array includes the texture array 4, the texture array 5, the texture array 6, the texture array 7, and the texture array 8 arranged in sequence. During implementation, the stroke contour is first filled with pixels in the order of the texture array 1, the texture array 2, and the texture array 3, and then the stroke contour is filled with pixels in the order of the texture array 4, the texture array 5, the texture array 6, the texture array 7, and the texture array 8.

The first texture array in this embodiment is used for achieving the transition between filling all sub-contours and filling part of sub-contours. When setting the first texture array, considering the naturalness of the transition, the number of combined sub-contours is set to be less than a set value, such as setting the number of combined sub-contours to be less than K/4. The second texture array in this embodiment is used for achieving different Feibai texture filling.

It should be noted that the first texture pattern in this embodiment is determined based on the first texture array, and the second texture pattern is determined based on the second texture array. The first texture pattern is used for achieving a transition filling between the full filling and the Feibai filling, and the second texture pattern is used for the Feibai filling.

In some embodiments, the texture array is selected as follows.

Mode 1: If the texture set is not used to fill the stroke contour corresponding to the previous trajectory point with pixels, the stroke contour corresponding to the current trajectory point is filled with pixels according to the first texture array.

In the implementation, it is determined whether to fully fill the previous trajectory point, that is, to fill the stroke contour with pixels. The stroke contour may be a stroke contour that is not split into K sub-contours, or a stroke contour that is split into K sub-contours, and the stroke contour is filled as a whole at one time.

In some embodiments, the texture array includes a plurality of first texture arrays arranged in sequence. If pixel filling is performed on the stroke contour corresponding to the previous trajectory point, the first texture array is used for performing pixel filling on a part of sub-contours corresponding to the current trajectory point. In implementation, when the transition from the full filling to the Feibai filling is performed for the first time, the first texture array used for transition is sequentially selected to perform pixel filling on the stroke contour corresponding to each trajectory point.

Mode 2: If a texture set is used to fill the stroke contour corresponding to the previous trajectory point with pixels, then pixels filling are performed on the stroke contours corresponding to the current trajectory point and the trajectory points after the current trajectory point according to the arrangement order of the texture array of the used texture set.

Optionally, if a texture set is used for filling the stroke contour corresponding to the previous trajectory point with pixels, the arrangement order of the texture array selected for the previous trajectory point and the number of trajectory points for pixel filling using the texture array with the arrangement order are determined. A texture array is determined from multiple texture arrays based on the arrangement order and the number of trajectory points, to fill a part of sub-contours corresponding to the current trajectory point with pixels.

In some embodiments, if the number of the trajectory points reaches a number threshold corresponding to the texture array in the arrangement order, the first texture array arranged after the texture array in the arrangement order is determined as the texture array corresponding to the current trajectory point.

If the number of the trajectory points does not reach the quantity threshold corresponding to the texture array in the arrangement order, the texture array in the arrangement order is determined as the texture array corresponding to the current trajectory point. The quantity threshold corresponding to the first texture array is less than the quantity threshold corresponding to the second texture array.

For example, take a texture set containing 8 texture arrays as an example, the texture set includes 3 first texture arrays and 5 second texture arrays, and the texture arrays are arranged in sequence as texture array 1, texture array 2, texture array 3, texture array 4, texture array 5, texture array 6, texture array 7, and texture array 8 in the texture set. The first texture array includes the texture array 1, the texture array 2, and the texture array 3 arranged in sequence. The second texture array includes the texture array 4, the texture array 5, the texture array 6, the texture array 7, and the texture array 8 arranged in sequence. During implementation, the stroke contour is first filled with pixels in the order of the texture array 1, the texture array 2, and the texture array 3, and then the stroke contour is filled with pixels in the order of the texture array 4, the texture array 5, the texture array 6, the texture array 7, and the texture array 8.

During implementation, for example, if the quantity threshold of the texture array 1 is 3, and the pixel filling for the corresponding stroke contour is completed for 3 trajectory points, then the texture array corresponding to the current trajectory point is determined to be texture array 2. If the quantity threshold of the texture array 4 is 5, and the pixel filling for the corresponding stroke contour is completed for 5 trajectory points, then the texture array corresponding to the current trajectory point is determined to be the texture array 5.

If the quantity threshold of the texture array 1 is 3, and the pixel filling for the corresponding stroke contour is completed for 2 trajectory points, then the texture array corresponding to the current trajectory point is determined to be the texture array 1. If the quantity threshold of the texture array 4 is 5, and the pixel filling for the corresponding stroke contour is completed for 3 trajectory points, then the texture array corresponding to the current trajectory point is determined to be the texture array 4.

Optionally, when multiple texture arrays in the texture set are used for pixel filling, the corresponding first texture array is replaced once every N trajectory points, and/or the corresponding second texture array is replaced once every M trajectory points.

Optionally, N is less than M.

Optionally, the N is a preset value, or the N is determined by the sampling time of the first trajectory point for pixel filling using the texture array.

Optionally, the M is a preset value, or the M is determined by the sampling time of the first trajectory point for pixel filling using the texture array.

In implementation, after selecting a texture set, the texture of the transition interval is generated according to the first N first texture arrays in turn, and the texture of the Feibai is generated according to the interval of M second texture arrays. Generally, the interval of changing the texture setting each time should not be too long, so as to ensure that the transition from full filling to Feibai splitting can be quickly achieved. In the present embodiment, the texture of the transition interval can be changed once every 3 trajectory points, that is, the first texture array is changed every 3 trajectory points, and each first texture array is used for filling the stroke contour corresponding to 3 consecutive trajectory points with pixels.

In some embodiments, the texture array includes a plurality of second texture arrays. The controller is specifically configured to perform the following steps:
when multiple second texture arrays are used for pixel filling, the second texture arrays are selected in the order in which the second texture forward arrays and the second texture reverse arrays are alternately arranged in sequence, to perform the pixel filling on the current trajectory point and the trajectory points after the current trajectory point.

The second texture forward array includes a plurality of second texture arrays arranged in sequence, and the second texture reverse array includes a plurality of second texture arrays arranged in reverse order.

In implementation, the second texture arrays can be selected in a Z-shaped order to produce a texture with the Feibai effect. In implementation, the first texture array is arranged before the second texture array, such as the texture set includes texture array 1, texture array 2, texture array 3, texture array 4, texture array 5, texture array 6, texture array 7, and texture array 8. The texture array 1, the texture array 2, and the texture array 3 are the first texture array, and the texture array 4, the texture array 5, the texture array 6, the texture array 7, and the texture array 8 are the second texture array. The texture array can be selected in the order of the texture array 4, the texture array 5, the texture array 6, the texture array 7, the texture array 8, the texture array 8, the texture array 7, the texture array 6, the texture array 5, the texture array 4, the texture array 4, the texture array 5, the texture array 6, the texture array 7, the texture array 8... to fill the stroke contour corresponding to each trajectory point with pixels.

Optionally, it may be configured to replace the second texture array every five trajectory points. Each second texture array is used for filling the stroke contours corresponding to the five trajectory points with pixels.

In some embodiments, when the drawing mode is changed from the Feibai splitting to the full filling, the texture arrays can be extracted in reverse order from the currently extracted texture array to the first texture array to generate textures. The details are as follows.
(1) if the texture array selected by the previous trajectory point is the last one of the second texture arrays arranged in sequence, then the corresponding second texture arrays are determined for the current trajectory point and the trajectory points after the current trajectory point in turn according to the arrangement order of the second texture arrays arranged in reverse order.
   Optionally, if the texture array selected for the previous trajectory point is the last one of the second texture array arranged in sequence, and the number of the trajectory points reaches the number threshold corresponding to the second texture array, then the corresponding second texture array is determined for the current trajectory point and the trajectory point after the current trajectory point in turn according to the arrangement order of the second texture array arranged in reverse order.
(2) If the texture array selected for the previous trajectory point is the last one of the second texture arrays arranged in reverse order, then the corresponding second texture arrays are determined for the current trajectory point and the trajectory points after the current trajectory point in turn according to the arrangement order of the second texture arrays arranged in sequence.

Optionally, if the texture array selected for the previous trajectory point is the last one of the second texture array arranged in reverse order, and the number of the trajectory points reaches the number threshold corresponding to the second texture array, then the corresponding second texture array is determined for the current trajectory point and the trajectory point after the current trajectory point in turn according to the arrangement order of the second texture array arranged in sequence.

During implementation, when the second texture array of the sparse Feibai interval is selected, the texture array is replaced every 5 trajectory points; when the first texture array of the transition interval is selected, the texture array is replaced every 3 trajectory points.

In some embodiments, the threshold value of the number of trajectory points for pixel filling of each texture array is a preset value; or,
the threshold value of the number of trajectory points for pixel filling of each texture array is determined by the sampling time of the first trajectory point for pixel filling of the texture array.

In implementation, the sampling time of the first trajectory point for pixel filling of the texture array is used as a random seed to generate a pseudo-random number, and the threshold value of the number of trajectory points for pixel filling of each texture array is determined according to the pseudo-random number.

In implementation, the threshold number of trajectory points for pixel filling of each texture array is determined as follows:
if the texture arrays corresponding to the current trajectory point and the previous trajectory point are different, the duration number T is determined according to the sampling time of the current trajectory point, T≥1;
the pixel filling is performed on the sub-contours corresponding to the current trajectory point and T-1 trajectory points after the current trajectory point according to the texture array corresponding to the current trajectory point.

During implementation, in order to further increase the naturalness of texture changes, when in the transition interval, at the first trajectory point of each change of the first texture array, the sampling timestamp of the trajectory point is used as a random seed to generate a pseudo-random number from 2 to 4, which is the threshold value of the number of trajectory points corresponding to this texture array; when in the sparse Feibai interval, at the first trajectory point of each change of the second texture array, the sampling timestamp of the trajectory point is used as a random seed to generate a pseudo-random number from 4 to 7, which is the threshold value of the number of trajectory points corresponding to this texture array.

In some embodiments, the texture set includes a plurality of texture sets, and different texture sets are used for representing different texture filling features. The controller is specifically configured to:
store a plurality of the texture sets; a texture set is selected from the plurality of texture sets to perform pixel filling on the stroke outline.

In some embodiments, the texture set includes a plurality of texture sets, and different texture sets are used for representing different texture filling features. A texture set is selected in the followings:
Method 1: arbitrarily selecting a texture set from a plurality of texture sets, and selecting a texture array from the texture set;
Method 2: selecting a corresponding texture set from a plurality of texture sets according to the sampling time of the trajectory point, and selecting a texture array from the corresponding texture set; the index number of a texture set corresponds to a pseudo-random number.

In implementation, the sampling time of the trajectory point is used as a random seed to generate a pseudo-random number, a texture set corresponding to the pseudo-random number is selected from the plurality of texture sets, and a texture array is selected from the texture set corresponding to the pseudo-random number.

Optionally, the controller is specifically configured to execute:
when the previous trajectory point adopts the full filling mode, and the current trajectory point adopts the Feibai filling mode, a texture set is selected from the plurality of texture sets, and pixel filling is performed on the stroke contour of the current trajectory point.

The full filling is used for performing pixel filling on the stroke contour of the trajectory point, and the Feibai filling is used for performing pixel filling on a part of the sub-contours of the stroke contour of the trajectory point.

In some embodiments, the present embodiment may also store the trajectory point information of the trajectory point, generate a pseudo-random number using the sampling time of the trajectory point contained in the trajectory point information, select a corresponding texture set from the plurality of texture sets, and use the corresponding texture set to refill a part of the sub-contours of the trajectory point with pixels.

During implementation, a pseudo-random number is generated using the sampling time of the trajectory point contained in the trajectory point information, and a texture set corresponding to the pseudo-random number is selected from the plurality of texture sets, and a part of sub-contours of the trajectory point are refilled with pixels using the texture set corresponding to the pseudo-random number.

It should be noted that after the present embodiment performs pixel filling on a part of the sub-contours in the stroke contour, when the redraw trigger condition is met, the texture set corresponding to the pseudo-random number is used for refilling the part of the sub-contours of the trajectory point with pixels.

In some embodiments, the trajectory point information of the trajectory point and the arrangement order of the texture array corresponding to the trajectory point may also be stored. The part of sub-contours of the trajectory point may be refilled with pixels by using the texture array corresponding to the arrangement order.

It should be noted that after the present embodiment performs pixel filling on a part of the sub-contours in the stroke contour, when the redraw triggering condition is met, the texture array corresponding to the arrangement order is used for refilling the part of the sub-contours of the trajectory point with pixels.

Optionally, the redraw triggering conditions in this embodiment include but are not limited to: the user closes the document and then reopens the document, turns pages, reloads the document, etc. In implementation, when the user writes in a document and fills pixels in a part of the sub-contour or stroke contour in the stroke contour of the trajectory point corresponding to the handwriting, when the user closes the document and opens the document again, the texture set corresponding to the pseudo-random number is used for refilling pixels in the part of the sub-contour of the trajectory point, or, the texture array corresponding to the arrangement order is used for refilling pixels in the part of the sub-contour of the trajectory point.

During implementation, when the drawing mode is changed from the full filling to Feibai splitting for the first time, a texture set is randomly selected from multiple texture sets as the basis for the texture change when the current trajectory point is in the Feibai splitting. During random selection, the sampling timestamp information of the current trajectory point passed by the application layer to the algorithm layer is used as a random seed to generate a pseudo-random number between 1 and M, and then the texture set with the index number of the pseudo-random number is extracted. When the redrawing trigger condition is met, the application layer passes all the pre-stored trajectory point information to the algorithm again for calling. Using the same sampling timestamp, the algorithm layer can generate the same pseudo-random number as the real-time drawing process, ensuring that the texture effect of the two drawings is consistent.

In implementation, the texture arrays of the texture set of this embodiment are stored in the order of transition interval texture (first texture array) and sparse Feibai texture (second texture array). Taking a texture set containing 8 texture arrays as an example, in this embodiment, the first 3 texture arrays are set as the transition interval textures, and the other 5 texture arrays are set as the sparse Feibai interval textures.

In implementation, after selecting a texture set, the texture of the transition interval is generated in sequence according to the first 3 first texture arrays, and the first texture array of the transition interval can be set to be replaced every three trajectory points. After the transition is completed, the second texture array is extracted from the sparse Feibai interval in a zigzag order. Specifically, the extraction is performed in the order of 4→8, 8→4, 4→8, ... In this interval, the second texture array is set to be replaced every five trajectory points.

In some embodiments, when the simulated pen type is a writing brush, and the writing speed or writing pressure of the trajectory point does not meet the preset requirements, all the sub-contours of the K sub-contours are pixel-filled, or, when the simulated pen type is not a writing brush, all the sub-contours of the K sub-contours are pixel-filled; when the drawing method is changed from the Feibai splitting to the full filling, before all the sub-contours of the K sub-contours are pixel-filled, the extraction is performed in reverse order from the currently extracted texture array to the first texture array.

Optionally, the texture set includes a texture array arranged in sequence. Before performing pixel filling on all the sub-contours of the K sub-contours, the controller is further configured to execute:
when the previous trajectory point is filled with Feibai and the writing speed or writing pressure of the current trajectory point does not meet the preset requirements, the stroke contour of the current trajectory point is filled with pixels using the texture array used for the previous trajectory point and the texture array arranged before the texture array in the texture set.

Optionally, the controller is specifically configured to execute:
filling the stroke contour of the current trajectory point with pixels in a reverse order from the texture array used for the Feibai filling to the first texture array in the texture set.

During implementation, when the second texture array of the sparse Feibai interval is selected, the second texture array is replaced every 5 trajectory points; when the first texture array of the transition interval is selected, the first texture array is replaced every 3 trajectory points.

In some embodiments, when the simulated pen type is not a brush, the stroke contour width of the stroke corresponding to the trajectory point is determined based on the writing inclination angle included in the trajectory point information of the trajectory point. The writing inclination angle represents the inclination angle of the writing pen relative to the writing plane. The number of sub-contours included in the stroke contour is determined based on the stroke contour width.

In implementation, the stroke contour width is adjusted based on the writing inclination angle. After the stroke contour width is calculated, the value of the stroke contour width is rounded down and recorded as K, which is used as the number of sub-contours for splitting the overall contour.

In some embodiments, the controller is specifically configured to perform pixel filling on all sub-contours in the following manner:
filling some of the K sub-contours with pixels in a first filling manner, and filling the other parts of the K sub-contours with pixel in a second filling manner; the density of pixel filling in the first filling manner is lower than the density of pixel filling in the second filling manner.

In some embodiments, according to the arrangement order of the K sub-contours, the 1st and Kth sub-contours are filled with pixels in the first filling method, and at least one of the 2nd to (K-1)th sub-contours is/are filled with pixels in the second filling method.

In some embodiments, the density of pixel filling in the first filling mode is the minimum density; and/or,
the density of pixel filling in the second filling mode is determined according to the writing pressure included in the trajectory point information of the trajectory point. The density of pixel filling in the second filling mode increases as the writing pressure of the trajectory point increases.

In implementation, taking scattered points filling as an example, the 1st and Kth sub-contours are filled with pixels by the lowest density of random scattered points. For the 2nd to K-1th sub-contours, the density of the random scattered points is adjusted according to the writing pressure, and these sub-contours are filled with pixels according to the adjusted density of the random scattered points.

In some embodiments, the stroke contour is divided into the 1st sub-contour, the Kth sub-contour and the combined sub-contour. The combined sub-contour is obtained by combining the 2nd to K-1th sub-contours. The 1st and Kth sub-contours are filled with pixels using the first filling method, and the combined sub-contour is filled with pixels using the second filling method.

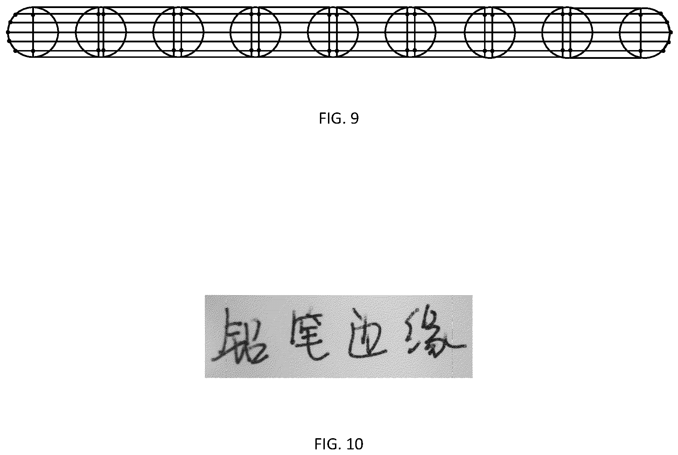

In implementation, in order to reduce the number of graphics to be drawn and thus reduce handwriting delay, this embodiment combines the 2nd to K-1th sub-contours into a large combined sub-contour for drawing. As shown in FIG. 9, the embodiment provides a sub-contour drawing method, calculating the position coordinates of each point, and connects them in a fixed clockwise (or counterclockwise) direction to form a large combined sub-contour. When drawing, only three sub-contours need to be drawn, namely, the 1st sub-contour, the Kth sub-contour, and the combined sub-contour.

As shown in FIG. 10, the present embodiment provides a schematic diagram of a pencil pen type simulation effect. During the actual simulation, the first and Kth sub-contours are filled with the lowest density of random scattered points, and the combined sub-contours are filled with random scattered points with a filling density that varies with writing pressure, so as to achieve a rough effect on both sides of the line.

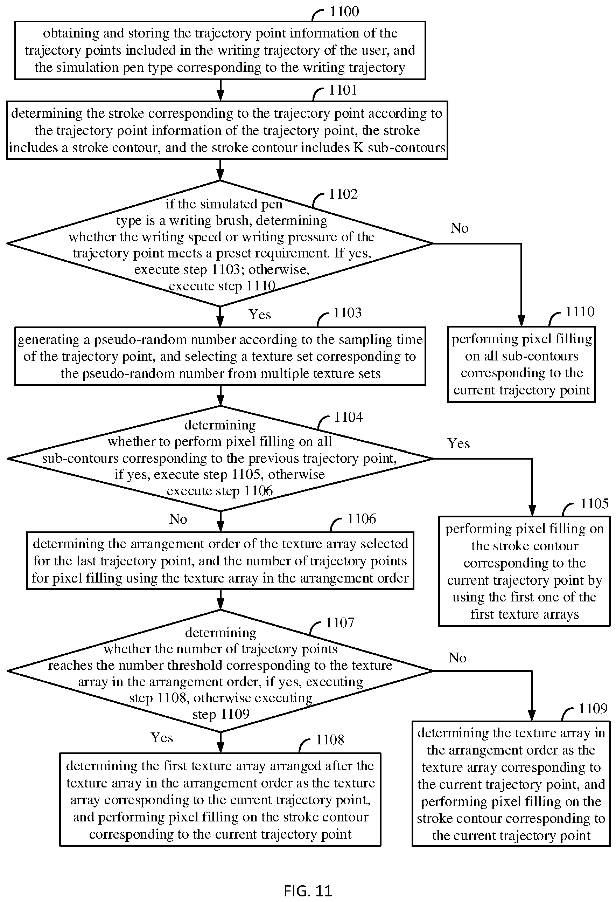

As shown in FIG. 11, some embodiments also provide a flowchart of a method for displaying handwriting with a brush simulation effect, and the specific implementation process is as follows:
Step 1100: obtaining and storing the trajectory point information of the trajectory points included in the writing trajectory of the user, and the simulation pen type corresponding to the writing trajectory;
Step 1101: determining the stroke corresponding to the trajectory point according to the trajectory point information of the trajectory point, the stroke includes a stroke contour, and the stroke contour includes K sub-contours;
Step 1102: if the simulated pen type is a writing brush, determining whether the writing speed or writing pressure of the trajectory point meets a preset requirement. If yes, execute step 1103; otherwise, execute step 1110;
Step 1103: generating a pseudo-random number according to the sampling time of the trajectory point, and selecting a texture set corresponding to the pseudo-random number from multiple texture sets;
Step 1104: determining whether to perform pixel filling on all sub-contours corresponding to the previous trajectory point, if yes, execute step 1105, otherwise execute step 1106;
Step 1105: performing pixel filling on the stroke contour corresponding to the current trajectory point by using the first one of the first texture arrays;
Step 1106: determining the arrangement order of the texture array selected for the last trajectory point, and the number of trajectory points for pixel filling using the texture array in the arrangement order;
Step 1107: determining whether the number of trajectory points reaches the number threshold corresponding to the texture array in the arrangement order, if yes, executing step 1108, otherwise executing step 1109;
Step 1108: determining the first texture array arranged after the texture array in the arrangement order as the texture array corresponding to the current trajectory point, and performing pixel filling on the stroke contour corresponding to the current trajectory point;
Step 1109: determining the texture array in the arrangement order as the texture array corresponding to the current trajectory point, and performing pixel filling on the stroke contour corresponding to the current trajectory point.
Step 1110: performing pixel filling on all sub-contours corresponding to the current trajectory point.

The embodiment can achieve different stroke effects including brushes, pencils, etc. It can achieve the rough effect of the edges of the pencil on both sides when actually writing. Whether the Feibai effect is produced is controlled by factors such as writing speed and writing pressure. A transition interval between the solid filling and the Feibai effect is designed to ensure the natural transformation of the pen shape effect. A pseudo-random texture array preservation scheme is designed to ensure the consistency of the writing effect when the system is redrawing. While achieving different random textures of brush strokes, the overall drawing process is designed to ensure that the drawn pen shape effect does not change when the handwritten document is closed and re-entered.

Embodiment 2: Based on the same inventive concept, the embodiment of the present disclosure also provides a handwriting display method. The principle of solving the problem by this method is similar to that of the display device. Therefore, the implementation of this method can refer to the implementation of the display device, and the repeated parts will not be repeated.

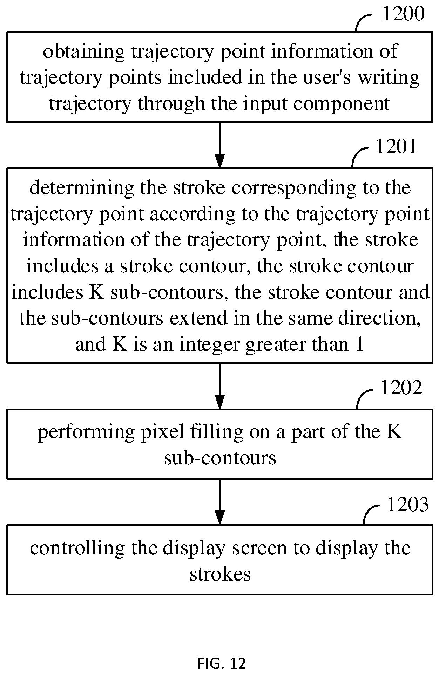

As shown in FIG. 12, the implementation process of this method is as follows:
Step 1200: obtaining trajectory point information of trajectory points included in the user's writing trajectory through the input component;
Step 1201: determining the stroke corresponding to the trajectory point according to the trajectory point information of the trajectory point, the stroke includes a stroke contour, the stroke contour includes K sub-contours, the stroke contour and the sub-contours extend in the same direction, and K is an integer greater than 1;
Step 1202: performing pixel filling on a part of the K sub-contours;
Step 1203: controlling the display screen to display the strokes.

Embodiment 3: Based on the same inventive concept, the embodiment of the present disclosure further provides a handwriting display device, the principle of solving the problem by the handwriting display device is similar to that of the display device, so the implementation of the device can refer to the implementation of the display device, and the repeated parts will not be repeated.

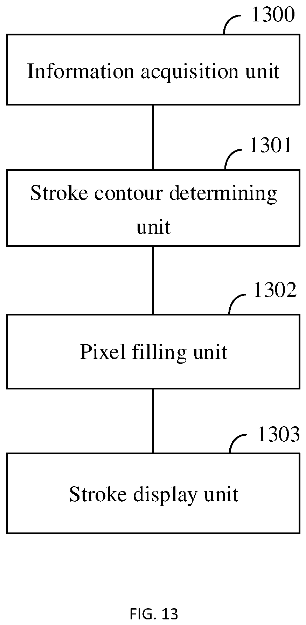

As shown in FIG. 13, the handwriting display device includes:
an information acquisition unit 1300 configured to obtain the trajectory point information of the trajectory points included in the user's writing trajectory through the input component;
a stroke contour determining unit 1301 configured to determine the stroke corresponding to the trajectory point according to the trajectory point information of the trajectory point, the stroke includes a stroke contour, the stroke contour includes K sub-contours, the stroke contour and the sub-contours have the same extension direction, and K is an integer greater than 1;
a pixel filling unit 1302 configured to perform pixel filling on a part of the K sub-contours; and
a stroke display unit 1303 configured to control the display screen to display the stroke.

Based on the same inventive concept, the embodiment of the present disclosure provides a computer storage medium, which includes: a computer program code, when the computer program code is run on a computer, the computer executes any of the handwriting display methods discussed above. Since the principle of solving the problem by the above computer storage medium is similar to that of the handwriting display method, the implementation of the above computer storage medium can refer to the implementation of the method, and the repeated parts will not be repeated.

In the specific implementation process, the computer storage medium may include: Universal Serial Bus Flash Drive (USB), mobile hard disk, read-only memory (ROM), random access memory (RAM), magnetic disk or optical disk, and other storage media that can store program codes.

Based on the same inventive concept, the embodiment of the present disclosure also provides a computer program product, which includes: computer program code, when the computer program code is run on a computer, the computer executes any of the handwriting display methods discussed above. Since the principle of solving the problem by the above computer program product is similar to that of the handwriting display method, the implementation of the above computer program product can refer to the implementation of the method, and the repeated parts will not be repeated.

The computer program product may use any combination of one or more readable media. The readable medium may be a readable signal medium or a readable storage medium. The readable storage medium may be, for example, but not limited to, an electrical, magnetic, optical, electromagnetic, infrared, or semiconductor system, device or device, or any combination of the above. More specific examples (non-exhaustive list) of readable storage media include: an electrical connection with one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

Those skilled in the art will appreciate that embodiments of the present disclosure may be provided as methods, systems, or computer program products. Therefore, the present disclosure may take the form of a complete hardware embodiment, a complete software embodiment, or an embodiment combining software and hardware. Moreover, the present disclosure may take the form of a computer program product implemented on one or more computer-usable storage media (including but not limited to disk storage and optical storage, etc.) containing computer-usable program codes.

The present disclosure is described with reference to the flowchart and/or block diagram of the method, device (system), and computer program product according to the embodiment of the present invention. It should be understood that each process and/or box in the flowchart and/or block diagram, as well as the combination of the process and/or box in the flowchart and/or block diagram can be implemented by computer program instructions. These computer program instructions can be provided to a processor of a general-purpose computer, a special-purpose computer, an embedded processor or other programmable data processing device to produce a machine, so that the instructions executed by the processor of the computer or other programmable data processing device produce a device for implementing the functions specified in one or more processes in the flowchart and/or one or more boxes in the block diagram.

These computer program instructions may also be stored in a computer-readable memory that can direct a computer or other programmable data processing device to work in a specific manner, so that the instructions stored in the computer-readable memory produce a manufactured product including an instruction device that implements the functions specified in one or more processes in the flowchart and/or one or more boxes in the block diagram.

These computer program instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A display device, comprising a display screen, a controller and an input component, wherein:
the display screen is configured to display contents;
the controller is configured for:
obtaining trajectory point information of trajectory points comprised in a user's writing trajectory through the input component;
determining a stroke corresponding to the trajectory points based on the trajectory point information of the trajectory points, wherein the stroke comprises a stroke contour, the stroke contour comprises K sub-contours, the stroke contour and the sub-contours extend in a same direction, and K is an integer greater than 1;
performing pixel filling on some sub-contours of the K sub-contours;
controlling the display screen to display the stroke.

2. The display device according to claim 1, wherein the controller is configured for:
not performing pixel filling on a sub-contour between at least two sub-contours with pixels filled.

3. The display device according to claim 1, wherein the controller is configured for:
randomly selecting some sub-contours from the K sub-contours and performing pixel filling the some sub-contours; or,
selecting some sub-contours from the K sub-contours and randomly performing pixel filling on the some sub-contours.

4. The display device according to claim 1, wherein the controller is configured for:
performing pixel filling on the stroke contour by using a texture atlas with Feibai features;
wherein the texture atlas with the Feibai features is used for filling the some sub-contours of the K sub-contours with pixels.

5. The display device according to claim 4, wherein the texture atlas of the Feibai features comprises a plurality of texture patterns, and different texture patterns represent different Feibai features;
the controller is configured for:
performing pixel filling on the stroke contour in sequence based on the plurality of texture patterns.

6. The display device according to claim 5, wherein
based on performing pixel filling on the stroke contour by using different texture patterns, at least one of following is comprised:
quantities of sub-contours with pixels filled between stroke contours are different;
positions of sub-contours with pixels filled between stroke contours are different; or
texture types of sub-contours with pixels filled between stroke contours are different.

7. The display device according to claim 6, wherein
based on performing pixel filling on the stroke contour by using different texture patterns, at least one of following is comprised:
quantities of sub-contours without pixels filled between stroke contours are different;
positions of sub-contours without pixels filled between stroke contours are different; or,
based on performing pixel filling on the stroke contour by using different texture patterns, and the quantity and the position of sub-contours without pixel filled between stroke contours being the same, the sub-contours with pixels filled between the stroke contours are filled using different texture types.

8. The display device according to claim 4, wherein the texture atlas comprises a plurality of texture patterns arranged in sequence;
the controller is configured for:
performing pixel filling on stroke contours in sequence according to an arrangement order of the plurality of texture patterns.

9. The display device according to claim 8, wherein a difference of the Feibai features between adjacent texture patterns is less than a difference threshold.

10. The display device according to claim 9, wherein
a stroke contour filled with a texture pattern comprises at least one group of sub-contours which are at same positions but in different filling modes as at least one group of sub-contours comprised in a stroke contour filled with an adjacent texture pattern;
in each of the stroke contours filled with the adjacent texture patterns, a quantity of sub-contours being adjacent with each other in the at least one group of sub-contours is less than a quantity-difference threshold;
wherein the sub-contours are arranged sequentially in the stroke contour, and an arrangement order of the sub-contours being adjacent with each other in the stroke contour is continuous.

11. The display device according to claim 10, wherein the filling modes comprise at least one of a texture filling mode based on the plurality of texture types and a non-filling mode; the non-filling mode represents that pixel filling is not performed;
the stroke contours filled with the adjacent texture patterns each comprises at least one group of sub-contours, wherein the at least one group of sub-contours in each of the stroke contours filled with the adjacent texture patterns are at same positions but filled using different texture types; in in each of the stroke contours filled with the adjacent texture patterns, a quantity of sub-contours being adjacent with each other in the at least one group of sub-contours is less than a first difference threshold; or,
the stroke contours filled with the adjacent texture patterns each comprises at least one group of sub-contours, wherein the at least one group of sub-contours in each of the stroke contours filled with the adjacent texture patterns are at same positions, with at least one group of sub-contours in one of the stroke contours filled with the adjacent texture patterns being in texture filling mode and at least one group of sub-contours in the other one of the stroke contours filled with the adjacent texture patterns being in the non-filling mode; and in each of the stroke contours filled with the adjacent texture patterns, a quantity of sub-contours being adjacent with each other in the at least one group of sub-contours is less than a second difference threshold.

12. The display device according to claim 11, wherein the first difference threshold is greater than the second difference threshold.

13. The display device according to claim 9, wherein
in the sub-contours of the stroke contour filled with the texture patterns, a quantity of combined sub-contours is less than a set value; wherein the combined sub-contours represent sub-contours filled with a same texture type and being adjacent to each other; the sub-contours are arranged sequentially in the stroke contour, and an arrangement order of the sub-contours being adjacent with each other in the stroke contour is continuous.

14. The display device according to claim 13, wherein the texture patterns comprise a first texture pattern and a second texture pattern;
a quantity of combined sub-contours in sub-contours of the stroke contour filled by the first texture pattern is less than a quantity of combined sub-contours in sub-contours of the stroke contour filled by the second texture pattern.

15. The display device according to claim 5, wherein the texture patterns comprise a first texture pattern and a second texture pattern; a degree of Feibai of the first texture pattern is lower than a degree of Feibai of the second texture pattern, wherein the degree of Feibai indicates a quantity of sub-contours without pixel filling in the stroke contour;
the controller is configured for:
performing pixel filling on the stroke contours in sequence from the first texture pattern to the second texture pattern.

16. The display device according to claim 15, wherein the texture patterns comprise a plurality of first texture patterns arranged sequentially and a plurality of second texture patterns arranged sequentially;
the controller is configured for:
in response to the texture atlas not being used for pixel filling on a stroke contour corresponding to a previous trajectory point, performing pixel filing on a stroke contour corresponding to a current trajectory point based on the first texture patterns; or,
in response to the texture atlas being used for pixel filling on the stroke contour corresponding to a previous trajectory point, performing pixel filling on a stroke contour corresponding to a current trajectory point and a stroke contour corresponding to a trajectory point after the current trajectory point based on the arrangement order of the texture patterns of the texture atlas.

17. The display device according to claim 8, wherein the controller is configured for:
in response to the plurality of texture patterns in the texture atlas being used for pixel filling, replacing a corresponding texture pattern every at least one trajectory point.

18. The display device according to claim 15, wherein the controller is configured for:
in response to the plurality of texture patterns in the texture atlas being used for pixel filling, replacing a corresponding first texture pattern every N trajectory points, and/or replacing a corresponding second texture pattern every M trajectory points.

19. The display device according to claim 18, wherein N is less than M.

20. The display device according to claim 15, wherein the texture patterns comprise a plurality of second texture patterns, and the controller is configured for:
in response to the plurality of second texture patterns being used for pixel filling, performing pixel filling for a current trajectory point and trajectory points after the current trajectory point by selecting the second texture patterns in an order in which a second texture forward group and a second texture reverse group are alternately arranged in sequence;
the second texture forward group comprises a plurality of second texture patterns arranged in forward order, and the second texture reverse group comprises a plurality of second texture patterns arranged in reverse order.

21. The display device according to any one of claims 4 to 20, wherein a plurality of texture atlas are provided, and different texture atlases are used for representing different Feibai features, and the controller is configured for:
storing the plurality of texture atlases;
selecting one texture atlas from the plurality of texture atlases to perform pixel filling on the stroke contour.

22. The display device according to claim 21, wherein the controller is configured for:
selecting any one texture atlas from the plurality of texture atlases to perform pixel filling on the stroke contour; or,
selecting a corresponding texture atlas from the plurality of texture atlases based on a sampling time of the trajectory point, to perform pixel filling on the stroke contour.

23. The display device according to claim 21, wherein the controller is configured for:
in response to a previous trajectory point being filled in a full filling mode and a current trajectory point being filled in a Feibai filling mode, selecting a texture atlas from the plurality of texture atlases to perform pixel filling on the stroke contour of the current trajectory point;
wherein the full filling mode is used for filling the stroke contour of the trajectory point, and the Feibai filling mode is used for filling a part of the sub-contours of the stroke contour of the trajectory point.

24. The display device according to any one of claims 5 to 20 and 22 to 23, wherein:
the texture patterns are determined based on a texture array, and the texture array is used for determining a filling position and a filling mode of a sub-contour to be filled.

25. The display device according to any one of claims 1 to 20, wherein the controller is configured to perform pixel filling on the some sub-contours in a following manner:
selecting one texture array from a pre-stored texture set comprising a plurality of texture arrays, wherein the texture arrays are used for determining a filling position and a filling mode of a sub-contour to be filled; each texture array is used for pixel filling on a stroke contour corresponding to a plurality of continuous trajectory points;
performing pixel filling on the some sub-contours based on selected texture array.

26. The display device according to claim 25, wherein the texture set comprises a plurality of texture arrays arranged in sequence; and the controller is configured for:
performing pixel filling on the stroke contours in sequence based on an order of the plurality of texture arrays.

27. The display device according to claim 26, wherein
stroke contours filled using adjacent texture arrays each comprises at least one group of sub-contours, wherein the at least one group of sub-contours in each of the stroke contours filled using the adjacent texture arrays are at same positions but in different filling modes;
in each of the stroke contours filled using the adjacent texture arrays, a quantity of the sub-contours being adjacent with each other in the at least one group of sub-contours is less than a quantity-difference threshold;
wherein the sub-contours are arranged sequentially in the stroke contour, and an arrangement order of the sub-contours being adjacent with each other in the stroke contour is continuous.

28. The display device according to claim 27, wherein the filling modes comprise at least one of a texture filling mode based on the plurality of texture types and a non-filling mode; the non-filling mode represents that pixel filling is not performed;
the stroke contours filled with the adjacent texture arrays each comprises at least one group of sub-contours, wherein the at least one group of sub-contours in each of the stroke contours filled with the adjacent texture patterns are at same positions but filled using different texture types; in in each of the stroke contours filled with the adjacent texture arrays, a quantity of sub-contours being adjacent with each other in the at least one group of sub-contours is less than a first difference threshold; or,
the stroke contours filled with the adjacent texture arrays each comprises at least one group of sub-contours, wherein the at least one group of sub-contours in each of the stroke contours filled with the adjacent texture patterns are at same positions, with at least one group of sub-contours in one of the stroke contours filled with the adjacent texture arrays being in texture filling mode and at least one group of sub-contours in the other one of the stroke contours filled with the adjacent texture arrays being in the non-filling mode; and in each of the stroke contours filled with the adjacent texture arrays, a quantity of sub-contours being adjacent with each other in the at least one group of sub-contours is less than a second difference threshold.

29. The display device according to claim 28, wherein the first difference threshold is greater than the second difference threshold.

30. The display device according to claim 26, wherein the texture arrays comprise a first texture array and a second texture array, and a quantity of sub-contours of the stroke contour filled using the first texture array is higher than a quantity of sub-contours of the stroke contour filed using the second texture array;
the controller is configured for:
performing pixel filling on the stroke contours in sequence from the first texture array to the second texture array.

31. The display device according to claim 26, wherein
in the sub-contours of the stroke contour filled using the texture arrays, a quantity of combined sub-contours is less than a set value; wherein the combined sub-contours represent sub-contours filled with the same texture type and being adjacent with each other; the sub-contours are arranged sequentially in the stroke contour, and an arrangement order of the sub-contours being adjacent with each other in the stroke contour is continuous.

32. The display device according to claim 31, wherein the texture arrays comprise a first texture array and a second texture array;
a quantity of combined sub-contours in sub-contours of a stroke contour filled using the first texture array is less than a quantity of combined sub-contours in sub-contours of a stroke contour filled using the second texture array.

33. The device according to claim 30, wherein the texture arrays comprise first texture arrays arranged in sequence and second texture arrays arranged in sequence, the second texture arrays being arranged after the first texture arrays; wherein the controller is configured for:
performing pixel filling on the stroke contours in sequence from the first texture arrays to the second texture arrays.

34. The display device according to claim 33, wherein the controller is configured for:
in response to the texture set not being used for pixel filling on a stroke contour corresponding to a previous trajectory point, performing pixel filling on a stroke contour corresponding to a current trajectory point based on the first texture array; or,
in response to the texture set being used for pixel filling on a stroke contour corresponding to a previous trajectory point, performing pixel filling on a stroke contour corresponding to a current trajectory point and a stroke contour corresponding to a trajectory point after the current trajectory point based on an arrangement order of the texture arrays of the texture set.

35. The display device according to claim 30, wherein the controller is configured for:
in response to the texture arrays in the texture set being used for pixel filling, replacing a corresponding first texture array every N trajectory points, and/or replacing a corresponding second texture array every M trajectory points.

36. The display device according to claim 18 or 35, wherein
N is less than M; or,
N is a preset value, or a value of N is determined by a sampling time of a first trajectory point filled using the texture arrays; or,
M is a preset value, or a value of M is determined by a sampling time of a first trajectory point filled using the texture arrays.

37. The display device according to claim 30, wherein the texture arrays comprise a plurality of second texture arrays, and the controller is configured for:
in response to the plurality of second texture arrays being used for pixel filling, selecting the second texture arrays in an order in which a second texture forward array and a second texture reverse array are alternately arranged in sequence, to perform pixel filling on a current trajectory point and trajectory points after the current trajectory point;
wherein the second texture forward array comprises a plurality of second texture arrays arranged in forward order, and the second texture reverse array comprises a plurality of second texture arrays arranged in reverse order.

38. The display device according to claim 25, wherein a plurality of texture sets are provided, and different texture sets are used for representing different texture filling features, and the controller is configured for:
storing the plurality of the texture sets;
selecting one texture set from the plurality of the texture sets to perform pixel filling on the stroke contour.

39. The display device according to claim 38, wherein the controller is configured for:
selecting any one texture set from the plurality of the texture sets to perform pixel filling on the stroke contour; or,
selecting, according to a sampling time of the trajectory point, a corresponding texture set from the plurality of the texture sets to perform pixel filling for the stroke contour.

40. The display device according to claim 38, wherein the controller is configured for:
in response to a previous trajectory point adopting a full filling mode, and a current trajectory point adopting a Feibai filling mode, selecting one texture set from the plurality of the texture sets, to perform pixel filling for a stroke contour of the current trajectory point;
wherein the full filling mode is used for pixel filling on the stroke contour of the trajectory point, and the Feibai filling mode is used for pixel filling on a part of the sub-contours of the stroke contour of the trajectory point.

41. The display device according to claim 39, wherein the controller is further configured for:
storing trajectory point information of the trajectory point;
generating a pseudo-random number by using the sampling time of the trajectory point comprised in the trajectory point information, and selecting a texture set corresponding to the pseudo-random number from the plurality of the texture sets; wherein one index number of the texture set correspond to one pseudo-random number;
performing pixel filling again on a part of the sub-contours of the trajectory point by using the texture set corresponding to the pseudo-random number.

42. The display device according to claim 39, wherein the controller is further configured for:
storing the trajectory point information of the trajectory point and an arrangement order of texture arrays corresponding to the trajectory point;
performing pixel filling again on a part of the sub-contours of the trajectory point by using the texture arrays corresponding to the arrangement order.

43. The display device according to any one of claims 1 to 20, wherein the controller is further configured for:
in response to a simulation pen type being a writing brush, and a writing speed or writing pressure of the trajectory point not meeting a preset requirement, performing pixel filling on all the K sub-contours; or,
in response to a simulation pen type not being a writing brush, performing pixel filling on all the K sub-contours.

44. The display device according to claim 43, wherein the texture set comprises texture arrays arranged in sequence; before performing pixel filling on all the K sub-contours, the controller is further configured for:
in response to a previous trajectory point being filled in the Feibai filling mode and the writing speed or the writing pressure of a current trajectory point not meeting the preset requirement, performing pixel filling on the stroke contour of the current trajectory point by using the texture array used for the previous trajectory point and a texture array arranged before the texture array used for the previous trajectory point in the texture set.

45. The display device according to claim 44, wherein the controller is configured for:
performing pixel filling on the stroke contour of the current trajectory point in a reverse order from the texture array used for the Feibai filling mode to a first texture array in the texture set.

46. The display device according to claim 1, wherein the controller is further configured for performing pixel filling on the stroke contour in a following manner:
performing pixel filling on a part of the K sub-contours in a first filling mode, and performing pixel filling on the other part of the K sub-contours in a second filling mode, wherein a density of pixel filling in the first filling mode is lower than a density of pixel filling in the second filling mode.

47. The display device according to claim 46, wherein the controller is configured for:
performing pixel filling on a 1st sub-contour and a Kth sub-contour in the first filling mode, and performing pixel filling on at least one of a 2nd sub-contour to a (K-1)th sub-contour in the second filling mode, based on an arrangement order of the K sub-contours.

48. The display device according to claim 46, wherein:
the density of pixel filling in the first filling mode is a minimum density; and/or,
the density of pixel filling in the second filling mode is determined according to a writing pressure comprised in the trajectory point information of the trajectory point; and the density of pixel filling in the second filling mode increases with an increase of the writing pressure of the trajectory point.

49. The display device according to claim 1, wherein the controller is further configured for:
in response to a simulation pen type not being a writing brush, determining a stroke contour width of a stroke corresponding to the trajectory point based on a writing inclination angle comprised in the trajectory point information of the trajectory point; wherein the writing inclination angle represents an inclination angle of a writing pen relative to a writing plane;
determining a quantity of sub-contours comprised in the stroke contour based on the stroke contour width.

50. A handwriting display method, comprising:
obtaining trajectory point information of trajectory points comprised in a user's writing trajectory through an input component;
determining a stroke corresponding to the trajectory points based on the trajectory point information of the trajectory points, wherein the stroke comprises a stroke contour, the stroke contour comprises K sub-contours, the stroke contour and the sub-contours extend in a same direction, and K is an integer greater than 1;
performing pixel filling on some sub-contours of the K sub-contours; and
controlling a display screen to display the stroke.

51. A computer storage medium for storing a computer program, wherein the computer program, when executed by a processor, implements steps of the handwriting display method according to claim 50.
